# EUROPEAN PATENT APPLICATION

(11) **EP 4 183 238 A1**
(43) Date of publication of application: **24.05.2023**
(21) Application number: 21208814.0
(22) Date of filing: 17.11.2021
(51) Int. Cl.: A01B 3/46, A01B 61/04, A01B 69/04

(54) **AGRICULTURAL PLOUGH SYSTEM AND METHOD FOR OPERATING THIS PLOUGH**

(71) Applicant: CNH Industrial Sweden AB, 590 96 Överum (SE)
(72) Inventor: Hertzog, Daniel, 59376 Blackstad (SE)
(74) Representative: CNH Industrial IP Department

(57) **Abstract**

The present disclosure relates to an agricultural plough system (300, 500) comprising: a plough implement (310, 510) connectable to an agricultural work vehicle (307, 507), the plough implement comprising at least one implement wheel (320, 520); at least one prime mover (394, 594) for driving the at least one implement wheel (320, 520); and a control unit (340, 540) that is configured to: receive plough-orientation-data indicative of an orientation of one or more components of the plough implement (310, 510) with respect to a direction of travel; determine, on the basis of the plough-orientation-data, a control-signal for controlling an operation of the at least one prime mover (394, 594).

## Description

### Background of the Invention

The present disclosure relates to an agricultural plough system. Other aspects of the present disclosure relate to a method for operating an agricultural plough system.

In agriculture, farming cycles are followed that can roughly be divided into the different steps of land preparation, seed sowing, fertilizing, irrigation, crop growth, and harvesting. Each of these steps is critical to yield optimal crop results and achieve the desired returns on initial investments. Of the listed steps, land preparation is typically further divided into steps of, as necessary, clearing obstructions (e.g. bushes, stones and rocks) and subsequent tillage.

Tilling crumbles and loosens the soil, improves the soil structure and incorporates crop residues and manure into the soil, thus fertilizing the ground. The improved soil structure allows for increased plant root growth, soil aeration and water penetration/filtration. Overall this results in higher yields, better long-term soil fertility, soil moisture retention, and weed management. Tillage can be separated into primary (relatively deep) and secondary (relatively shallow) tillage. In primary tillage, such as ploughing, the soil is turned over such that nutrients come to the surface. In addition to turning up the soil to bring fresh nutrients to the top and depositing plant residue below where it will break down, this process also aerates the earth - enabling it to hold more moisture. Preparing the land to a greater depth produces a rougher surface finish than secondary tillage. Secondary tillage (e.g. seedbed cultivation) breaks up soil clods into smaller masses which might be desirable for small seeds or plants that have minimal clod-handling ability.

Primary tillage, and particularly ploughing, is widely regarded as one of the most effective ways of preventing crop disease, removing weeds, and controlling mice and other pests. In its simplest form the turnplough, also known as the mouldboard plough, includes a variety of plough bodies, which are blades for penetrating and turning over the soil in arrays of adjacent trenches, known as furrows. Modern ploughs typically include a plurality of plough bodies connected to a plough frame such that they are laterally offset manner from each other when the plough is in use. Each plough body is connected to the plough frame via corresponding beams. The plough frame, in turn, is connected to a towing or pushing vehicle via a hitch arranged at a front or back end of the frame.

Depending on the density of the soil, a working depth of the plough bodies can be adjusted. For instance, the plough bodies working depth may be shallow in harder (dense) soils, whereas a deeper working depth may be applied in softer (less dense) soils. The plough bodies can be rigidly attached to the main frame, such that their distance from the main frame remains constant. Accordingly, the working depth of the ploughs are then adjusted by varying the ground clearance of the main frame. If the main frame is brought closer to the ground surface, the ground clearance is reduced, and the plough bodies penetrate deeper into the soil. Similarly, if the main frame is lifted further off the ground, the ground clearance is increased, and the plough bodies are raised, thereby reducing the working depth.

The ground clearance of the main frame may, for example, be controlled by one or more implement wheels (also known as depth wheels). The one or more implement wheels may be connected to any part of the main frame such as the rear end of the main frame. An adjustable linkage may be provided between the main frame and the implement wheel to allow for changes in the distance between the implement wheel and the main frame. During ploughing, the implement wheel runs on the ground surface and supports the weight of the plough. If the distance between the implement wheel and the main frame is reduced, then the ground clearance between the main frame and the ground surface reduces accordingly. On the other hand, if the distance between the implement wheel and the main frame is increased, the ground clearance of the main frame increases. As outlined before, changing the main frame's ground clearance results in a variation of the ploughing depth.

Another factor in correctly setting up agricultural ploughs is a pull-line adjustment of the plough system in order to avoid unnecessary losses due to lateral forces created by the plough implement during the ploughing operation. The pull-line adjustment is one of the most important base settings of a plough system and refers to an alignment between the plough implement and a corresponding work vehicle. Yet, many farmers are not trained on how to optimally adjust the pull-line. Moreover, known pull-line adjustment mechanisms may be difficult to operate and can require specialist tools.

In view of the above, there is generally a need for an improved way of correctly aligning the position of the plough implement with respect to the work vehicle.

It is an aim of the present invention to solve or at least ameliorate one or more problems of the prior art.

### Summary of the Invention

Aspects and embodiments of the disclosure provide an agricultural plough system and a method of operating an agricultural plough system as claimed in the appended claims.

According to a first aspect, there is provided an agricultural plough system comprising:
a plough implement connectable to an agricultural work vehicle, the plough implement comprising at least one implement wheel;
at least one prime mover for driving the at least one implement wheel; and
a control unit that is configured to:
   receive plough-orientation-data indicative of an orientation of one or more components of the plough implement with respect to a direction of travel;
   determine, on the basis of the plough-orientation-data, a control-signal for controlling an operation of the at least one prime mover.

In another embodiment, the plough implement comprises a drawbar, wherein the plough-orientation-data is representative of a horizontal angle between the drawbar and the direction of travel.

In another embodiment, the plough-orientation-data comprises one or more of:
image-data representative of an orientation of the plough implement in a horizontal plane;
actuator-position-data that is representative of a position of a plough-width-adjustment-actuator;
actuator-pressure-data associated with working fluid pressures of a plough-width-adjustment-actuator;
lateral-force-data representative of lateral forces introduced into the plough system when the plough implement is in use;
lifting-arm-orientation-data associated with an orientation of one or more lifting arms of the agricultural vehicle;

In another embodiment, the plough implement is a semi-mounted plough implement comprising a headstock and a drawbar, said drawbar being pivotably connected to the headstock, and wherein the plough-orientation-data comprises drawbar-orientation-data that is representative of an orientation of the drawbar with respect to the direction of travel.

In another embodiment, the control unit is further configured to:
receive field-data associated with ground conditions of a field across which the agricultural plough system is moved when in use; and
determine, on the basis of the plough-orientation-data and the field-data, the control-signal for controlling an operation of the at least one prime mover.

In another embodiment, the agricultural plough system comprises a database including a plurality of candidate-field-data, and wherein the control unit is configured to:
receive location-data indicative of a position of the plough implement and/or an associated agricultural work vehicle within the field; and
use the location-data to select one of the candidate-field-data as the field-data.

In another embodiment, the control unit is configured to:
determine a plough-orientation-parameter on the basis of the plough-orientation-data;
compare the plough-orientation-parameter to a target-orientation-parameter; and
determine a plough-orientation-status on the basis of a comparison result.

In another embodiment, the control unit is configured to calculate the plough-orientation-parameter as an average of a plurality of values of the plough-orientation-data.

In another embodiment, the control unit is configured to:
determine a difference between the plough-orientation-parameter and the target-orientation-parameter;
determine the control-signal on the basis of the difference between the plough-orientation-parameter and the target-orientation-parameter.

In another embodiment, the control unit is configured to:
determine a control-signal for operating the prime mover in such a way that the at least one implement wheel moves faster than one or more driven wheels of a corresponding work vehicle, if the difference between the plough-orientation-parameter and the target-orientation-parameter exceeds a first plough-orientation-threshold; and/or
determine a control-signal for operating the prime mover in such a way that the at least one implement wheel moves slower than one or more driven wheels of a corresponding work vehicle, if the difference between the plough-orientation-parameter and the target-orientation-parameter falls below a second plough-orientation-threshold.

In another embodiment, the plough system comprises a brake system for decelerating the at least one implement wheel, and wherein the control unit is configured to:
activate the brake system in such a way that the at least one implement wheel is decelerated, if the difference between the plough-orientation-parameter and the target-orientation-parameter falls below a second plough-orientation-threshold.

In another embodiment, the control unit is configured to:
receive drive-data indicative of a current drive speed of the at least one implement wheel; and
determine the control-signal on the basis of the plough-orientation-data and the drive-data.

In another embodiment, the at least one prime mover includes a hydraulic motor, and wherein the plough system comprises a hydraulic fluid supply controller for selectively suppling hydraulic fluid to the hydraulic motor, and wherein the control-unit is configured to provide the control-signal to the hydraulic fluid supply controller.

In another embodiment, the plough system at least one plough body and at least one actuator for adjusting an angle of the implement wheel relative to an orientation of the at least one plough body, and wherein the control unit is configured to:
determine, on the basis of the plough-orientation-data, an implement wheel angle-control-signal for controlling the angle of the implement wheel with respect to an orientation of the at least one plough body.

According to another aspect of the present disclosure, there is provided a method of operating an agricultural plough system, the agricultural plough system comprising:
a plough implement connectable to an agricultural work vehicle, the plough implement comprising at least one implement wheel; and
at least one prime mover for driving the at least one implement wheel, wherein the method comprises:
   receiving plough-orientation-data indicative of an orientation of a component of the plough implement with respect to a direction of travel;
   determining, on the basis of the plough-orientation-data, a control-signal for controlling operation of the at least one prime mover; and
   operating the prime mover on the basis of the control-signal.

According to an aspect of the present disclosure there is provided a control unit for controlling any of the above agricultural systems or carrying out the steps of the above method.

In yet another aspect of the present disclosure, there is provided a computer program configured to perform the above method or to configure the above control unit. When run on a computer, the computer program causes the computer to configure any apparatus, including the control unit, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device, or may be embodied as a transient signal. Such a transient signal may be a network download, including an internet download.

The agricultural plough and/or a corresponding work vehicle may be remote controlled, e.g. from a farm office. Accordingly, the agricultural work vehicle may include one or more communication interfaces for connection to a remote processor and/or a remote controller. Similarly, the agricultural implement may include one or more communication interfaces for connection to a remote processor and/or a remote controller.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1A shows a right-side view of a mounted agricultural implement with fixed ground engaging tools;
Figure 1B shows a left-side view of the agricultural implement shown in Figure 1A;
Figure 1C shows a plan view of the agricultural implement shown in Figure 1A;
Figure 2 shows a schematic representation of the trajectory of an agricultural machinery within a work area;
Figure 3 shows a functional diagram of an exemplary agricultural plough system;
Figure 4A shows an agricultural plough system with an incorrectly adjusted pull-line.
Figure 4B shows an agricultural plough system with correctly adjusted pull-line; and
Figure 5 shows a plan view of a semi-mounted agricultural implement;
Figure 6 shows a schematic flow-chart of a computer implemented method for controlling an agricultural plough system.

### Detailed Description of the Drawings

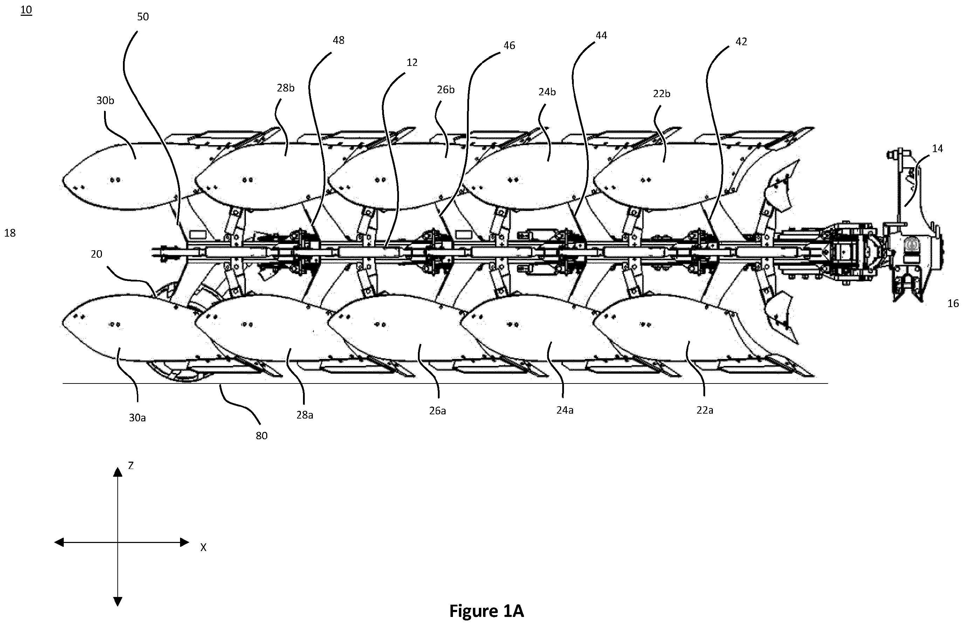

Figures 1A to 1C show various views of an agricultural implement, particularly a plough implement 10. As will be described in more detail below, the plough implement 10 shown in Figures 1A to 1C is a reversible plough.

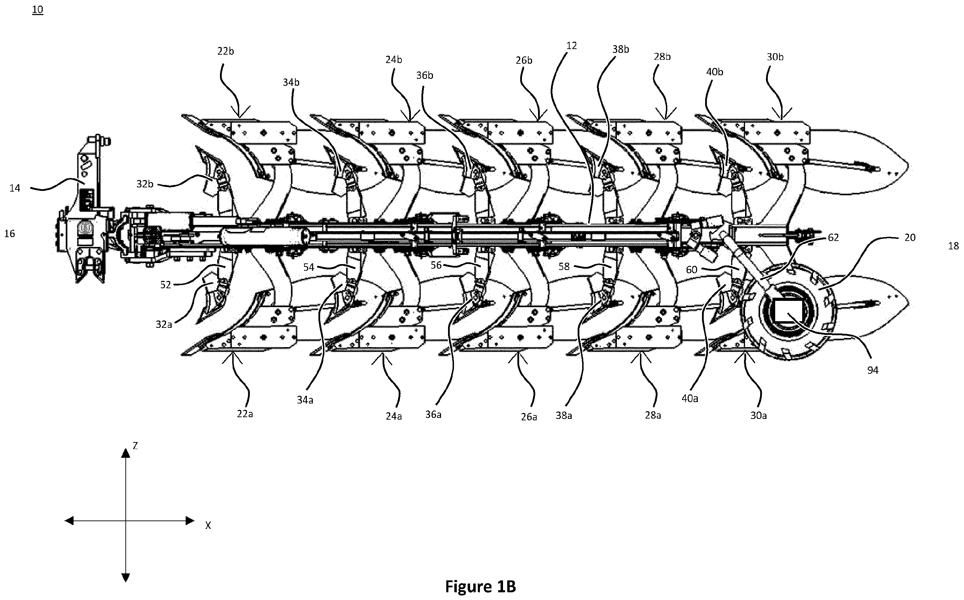

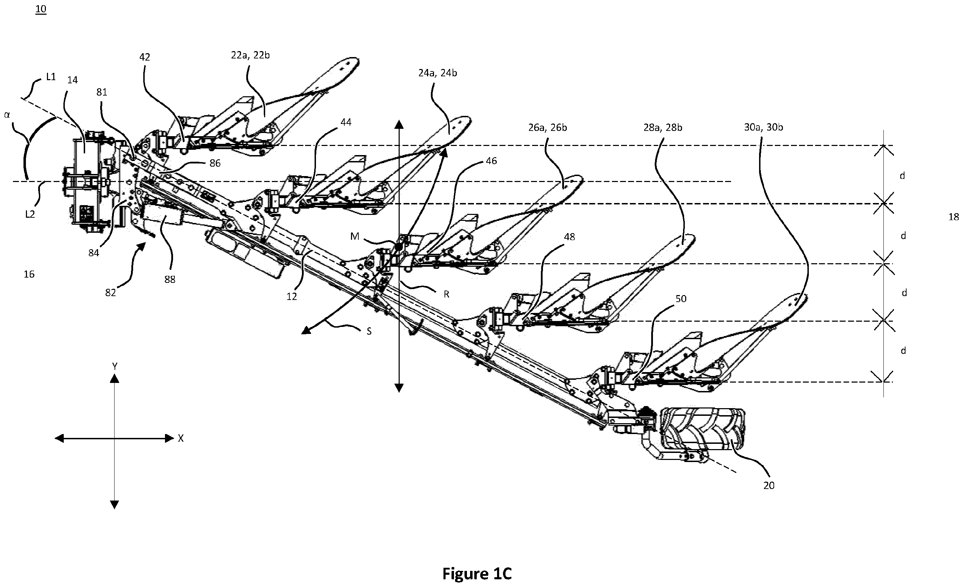

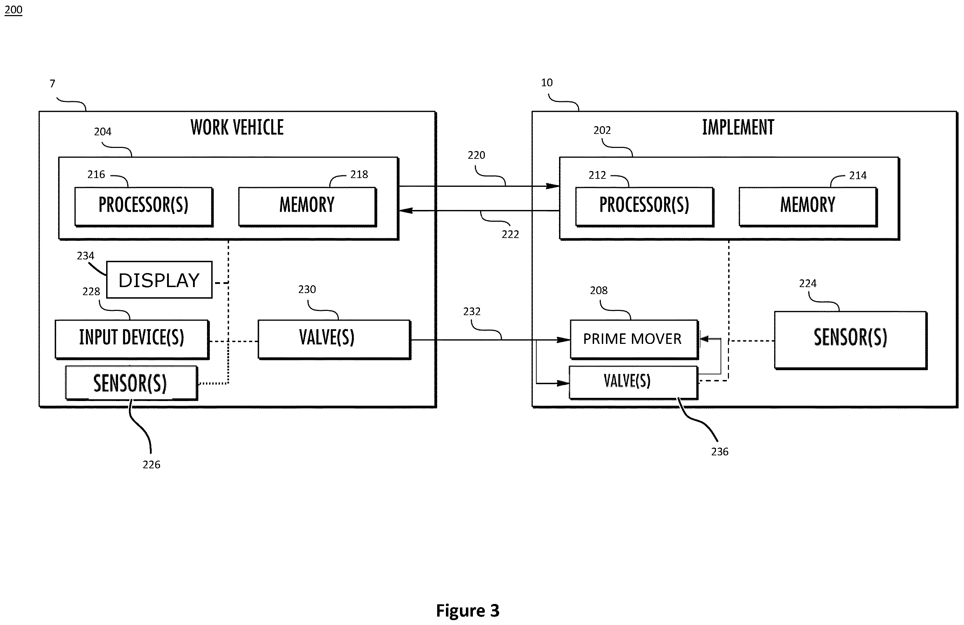

In the following, the term "longitudinal direction" shall refer to direction X shown in Figures 1A to 1C. In normal conditions, the "longitudinal direction" is aligned with a direction of travel of the agricultural plough implement 10. The term "lateral direction" shall refer to direction Y shown in Figures 1C and 3. The lateral direction Y is perpendicular to the "longitudinal direction" X. The term "vertical direction" shall refer to direction Z shown in Figures 1A and 1B. The "vertical direction" Z is perpendicular to the "longitudinal direction" X and the "lateral direction" Y.

The plough implement 10 comprises a main frame 12. The main frame 12 may be a rectangular or round tube extending between a headstock 14 at a front end 16 of the plough towards an implement wheel 20 at a rear end 18 of the plough. The main frame 12 supports a variety of ground-engaging tools.

In the example of Figures 1A to 1C, the ground engaging tools include plough bodies 22a, 22b, 24a, 24b, 26a, 26b, 28a, 28b, 30a, 30b and plough skimmers 32a, 32b, 34a, 34b, 36a, 36b, 38a, 38b, 40a, 40b. A plurality of first ground engaging tools, i.e. plough bodies 22a, 24a, 26a, 28a, 30a and skimmers 32a, 34a, 36a, 38a, and 40a, are arranged on a first side of the main frame 12. In a first configuration of the main frame 12, illustrated in Figures 1A to 1C, the plurality of first ground engaging tools are arranged below the main frame 12.

A plurality of second ground engaging tools, i.e. plough bodies 22b, 24b, 26b, 28b, 30b and skimmers 32b, 34b, 36b, 38b, and 40b, are arranged on a second side of the main frame 12, opposite to the plurality of first ground engaging tools. In the first configuration of the main frame 12, illustrated in Figures 1A to 1C, the plurality of second ground engaging tools are arranged above the main frame.

Each of the plough bodies 22a, 22b, 24a, 24b, 26a, 26b, 28a, 28b, 30a, 30b is connected to the main frame 12 by means of beams 42, 44, 46, 48, 50. Each of the beams 42, 44, 46, 48, 50 has a substantially Y-shaped structure.

A first beam 42 supports a first pair of plough bodies 22a, 22b. A second beam 44 supports a second pair of plough bodies 24a, 24b. A third beam 46 supports a third pair of plough bodies 26a, 26b. A fourth beam 48 supports a fourth pair of plough bodies 28a, 28b. A fifth beam 50 supports a fifth pair of plough bodies 30a, 30b.

Each of the pairs of plough bodies 22a, 22b, 24a, 24b, 26a, 26b, 28a, 28b, 30a, 30b is designed to create a furrow in the field when the plough is dragged behind or pushed by an agricultural work vehicle such as a tractor. It follows that each run of the illustrated plough implement 10 through a field creates five adjacent furrows.

A first mounting rail 52 supports a first pair of skimmers 32a, 32b. A second mounting rail 54 supports a second pair of skimmers 34a, 34b. A third mounting rail 56 supports a third pair of skimmers 36a, 36b. A fourth mounting rail 58 supports a fourth pair of skimmers 38a, 38b. A fifth mounting rail 60 supports a fifth pair of plough bodies 40a, 40b. The skimmers 32a, 32b, 34a, 34b, 36a, 36b, 38a, 38b, 40a, 40b and/or their respective mounting rails may be adjustable with respect to the main frame 12 to change the distance between the skimmers 32a, 32b, 34a, 34b, 36a, 36b, 38a, 38b, 40a, 40b and the main frame. In one example, the skimmers 32a, 32b, 34a, 34b, 36a, 36b, 38a, 38b, 40a, 40b may be movable up and down towards and away from the main frame 12 to individually adjust the working depth of each of skimmers. The skimmers 32a, 32b, 34a, 34b, 36a, 36b, 38a, 38b, 40a, 40b may either be manually or automatically adjustable.

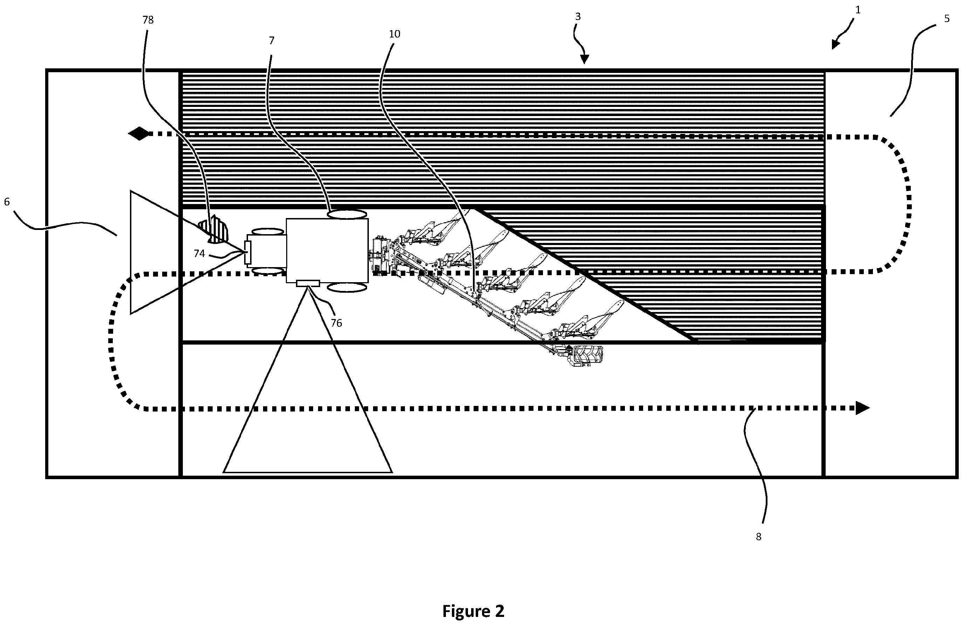

Turning to Figure 2, a typical operation of an agricultural machinery comprising a tractor 7 and a plough implement 10 is described. In use, the plough implement 10 is drawn as an attachment (implement) behind an agricultural towing vehicle (e.g. tractor 7). It will be appreciated that it is equivalently feasible to locate the plough implement 10 in front of or both in front of and behind the tractor 7.

Figure 2 shows a schematic work area 1, e.g. a crop field, which is divided into a main field 3 and headlands 5,6. A tractor 7 draws the plough implement 10 across the main field 3 in generally parallel working rows. The working rows are part of the trajectory 8 of the tractor 7 and typically run in parallel with a long edge of the work area 1. Each working row represents an individual run of the agricultural machinery across the field between headlands 5 and 6. As will be described in more detail below, a five-furrow plough, such as the exemplary plough shown in Figures 1A to 1C creates a total of five furrows per run.

At the end of each run/working row, the tractor 7 and plough implement 10 use the upcoming headland 5 or 6 for turning around, as indicated by trajectory 8. It is known in the art that the soil of the headlands 5, 6 is subject to greater levels of soil compaction as it receives more traffic per unit area than the main field 3. In order not to disturb the soil of the headlands 5, 6 more than necessary, it is known to lift the ground engaging tools, such as the plough bodies and the skimmers, off the ground into a headland or transfer position, just before the plough implement 10 reaches the headlands 5 or 6 respectively. Once the tractor 7 and the corresponding plough implement 10 have turned on the headland 5, 6, the ground engaging tools of the plough implement 10 are, again, lowered towards an operating position to engage the soil of the main field 3.

In the illustration of Figure 2, the plough implement 10 is working on the main field 3 and, therefore, is arranged in the operating position. As the plough implement 10 reaches the border between the headland 5/6 and the main field 3, the plough implement 10 is transferred to a headland/transfer position. It follows that each working row starts with an adjustment of the plough from the transfer position into the operating position and ends with an adjustment of the plough from the operating position into the transfer position.

The plough implement 10 shown in Figures 1A to 1C is of the fully-mounted type. In fully-mounted ploughs, the weight of the plough is carried exclusively by the tractor when the plough is in its transfer position (on the headlands). In other words, the plough is then exclusively supported by the tractor 7 via headstock 14 and may be lifted off the ground with a lift cylinder of a tractor linkage.

During the turning movement on the headlands, the plough implement 10 is also reversed. That is, the main frame 12 is rotated by about 180 degrees with respect to the headstock 14 to move the plough from a first configuration to a second configuration. It will be appreciated that if the operator is ploughing in the furrow, then the main frame 12 may not be rotated by exactly 180 degrees, it is more likely to be 190-200 degrees or 160-170 degrees depending on which direction the main frame 12 turns. If the operator is ploughing on-land, then the main frame 12 may be rotated by an angle that is closer to 180 degrees, perhaps exactly 180 degrees. That is, the main frame 12 is rotated by around 180 degrees with respect to the headstock 14 to move the plough from a first configuration to a second configuration.

In its first configuration shown in Figures 1A to 1C, the plough implement 10 is set up such that the plurality of first ground engaging tools, i.e. plough bodies 22a, 24a, 26a, 28a, and 30a and skimmers 32a, 34a, 36a, 38a, 40a, of each of the pairs are in contact with the soil. This first configuration is shown in Figure 2 and sometimes also referred to as the "left side configuration", since most of the plough bodies are arranged to the left of tractor 7. In its second configuration (not illustrated), the plough implement 10 is set up such that the plurality of second ground engaging tools, i.e. plough bodies 22b, 24b, 26b, 28b, 30b and skimmers 32b, 34b, 36b, 38b, 40b, are in contact with the soil. This second configuration is achieved after rotating the main frame by 180 degrees, such that the majority of plough bodies are then located to the right of the tractor (not shown). The second configuration is, therefore, also sometimes referred to as the "right side configuration".

Tilling the field with the plough implement 10 in this first configuration provides a first furrow created by the first plough body 22a, a second furrow created by the second plough body 24a, a third furrow created by the third plough body 26a, a fourth furrow created by the fourth plough body 28a, and a fifth furrow created by the fifth plough body 30a. A furrow width is determined by the lateral distance d between the plough bodies 22a, 22b, 24a, 24b, 26a, 26b, 28a, 28b, 30a, 30b, as illustrated in Figure 1C.

As the reversible plough implement 10 reaches the end of the first run, the main frame 12 is rotated by 180 degrees (reversed) with respect to the headstock 14. A turning cylinder (not shown), attached to the headstock 14 may be used to rotate (reverse) the plough implement 10. During rotation of the main frame, the first plurality of plough bodies, e.g. 22a, 24a, 26a, 28a, 30a, are transferred to the top of the plough implement 10. At the same time, the second plurality of plough bodies e.g. 22b, 24b, 26b, 28b, 30b, which were not in use in the previous run, is then transferred to the lower end of the plough implement 10 and will be submerged in the soil during the next run. The reversible plough is then in its second configuration (not shown).

Executing a second run of the field with the plough implement 10 in this second configuration provides a first furrow created by the sixth plough body 22b, a second furrow created by the seventh plough body 24b, a third furrow created by the eighth plough body 26b, a fourth furrow created by the ninth plough body 28b, and a fifth furrow created by the tenth plough body 30b.

Reversing the plough implement 10 between consecutive runs has the advantage that the plough bodies 22a, 22b, 24a, 24b, 26a, 26b, 28a, 28b, 30a, 30b that engage the soil always face the same side edge of the main field 3, irrespective of the tractor's orientation.

In both configurations of the plough implement 10 the main frame 12 is supported by an implement wheel 20. The implement wheel 20 is arranged at the back end 18 of the plough implement 10. Since the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b are generally fixed to the main frame via beams 42, 44 46, 48 and 50, there is no possibility of adjusting the working depth of said ground engaging tools without changing the ground clearance of the main frame 12. To this end, the plough 10 shown in Figures 1A to 1C includes implement wheel 20, which acts as a depth wheel to adjust the ground clearance of the main frame 12. A linkage 62 provided between the implement wheel 20 and the main frame 12 allows the operator to lift or lower the main frame 12 with respect to a ground surface 80. The linkage 62 may be connected to an actuator, e.g. a hydraulic cylinder (not shown), for adjusting the distance between the implement wheel 20 and the main frame, thereby lifting and lowering the main frame. The linkage 62 and the actuator together form a depth adjustment apparatus for the plough bodies 22a, 22b, 24a, 24b, 26a, 26b, 28a, 28b, 30a, 30b and the skimmers 32a, 32b, 34a, 34b, 36a, 36b, 38a, 38b, 40a, 40b. Since the position of the plurality of first and second ground engaging tools is fixed with respect to the main frame 12, any change in the main frame's ground clearance will also affect the working depth of the plurality first and second ground engaging tools. In particular, if the main frame 12 is lowered by shortening the linkage 62 between implement wheel 20 and the main frame 12, then the working depth of the plurality of first ground engaging tools shown in Figures 1A to 1C is increased, i.e. the plurality of first ground engaging tools are lowered further into/towards the soil. If, on the other hand, the main frame 12 is lifted, by extending the linkage 62 between implement wheel 20 and the main frame 12, then the working depth of the plurality of first ground engaging tools is decreased, i.e. the plurality of first ground engagement tools are raised.

The implement wheel 20 comprises a prime mover 94 for driving the implement wheel. The implement wheel 20 may be driven independently of the tractor wheels. The prime mover 94 may be of any type suitable for rotating the implement wheel 20. In one embodiment, the prime mover 94 may be a hydraulic motor for moving the implement wheel 20 in or against the direction of travel by means of hydraulic fluid provided to the plough 10. A corresponding fluid source may be arranged directly on the plough 10. Alternatively, pressurised hydraulic fluid may be provided to the hydraulic motor by a fluid source arranged on a corresponding work vehicle (e.g. a tractor). In another embodiment, the prime mover 94 may be an electric motor. An electric power source (e.g. a generator) may be arranged directly on the plough 10. Alternatively, electric power may be provided to the electric motor by an electric power source arranged on a corresponding work vehicle (e.g. a tractor).

As will be explained in more detail below, the agricultural plough system of the present disclosure includes a control unit for controlling the operation of the prime mover 94 on the basis of an orientation of one or more parts of the plough implement with respect to the direction of travel. In this way, the control unit may activate the prime mover 94 to obtain and/or maintain a correct pull-line adjustment. In some examples, the control unit may increase or decrease the speed of the driven implement wheel to adjust the angle of the main frame 12 with respect to the direction of travel to maintain the pull-line setting, as will be set out in more detail below.

Referring back to Figure 1C, it will be appreciated that the distance d between the plough bodies 22a/22b, 24a/24b, 26a/26b, 28a/28b, and 30a/30b is adjustable. In the embodiment of the plough implement 10 shown in Figures 1A to 1C, the lateral distance d is adjustable by pivoting the main frame 12 in a horizontal plane, such as in the plane shown in Figure 1C. In other words, the main frame 12 is connected to the headstock 14 via a pivot 81. The main frame 12 may rotate about the pivot 81 with respect to the headstock 14 and thus also with respect to an agricultural work vehicle (not shown) that is connected to the headstock 14.

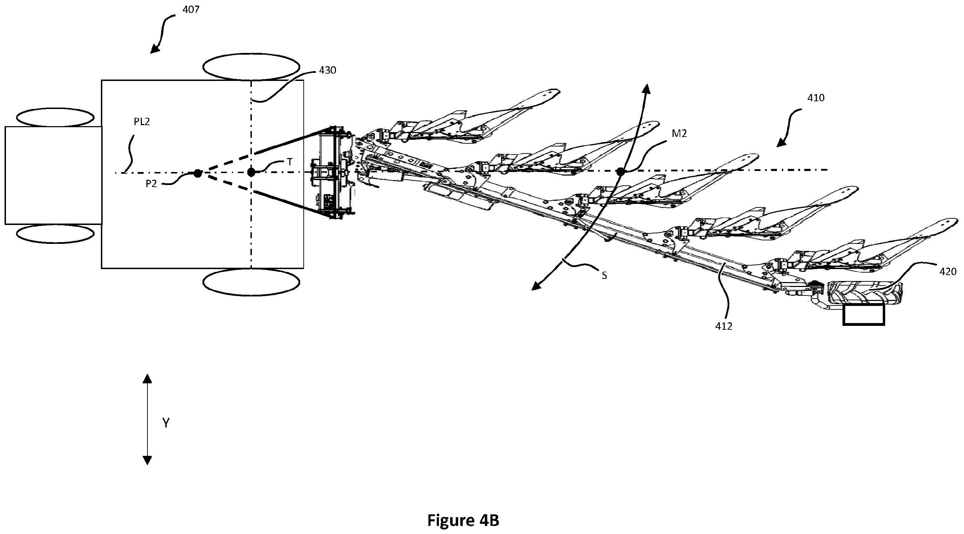

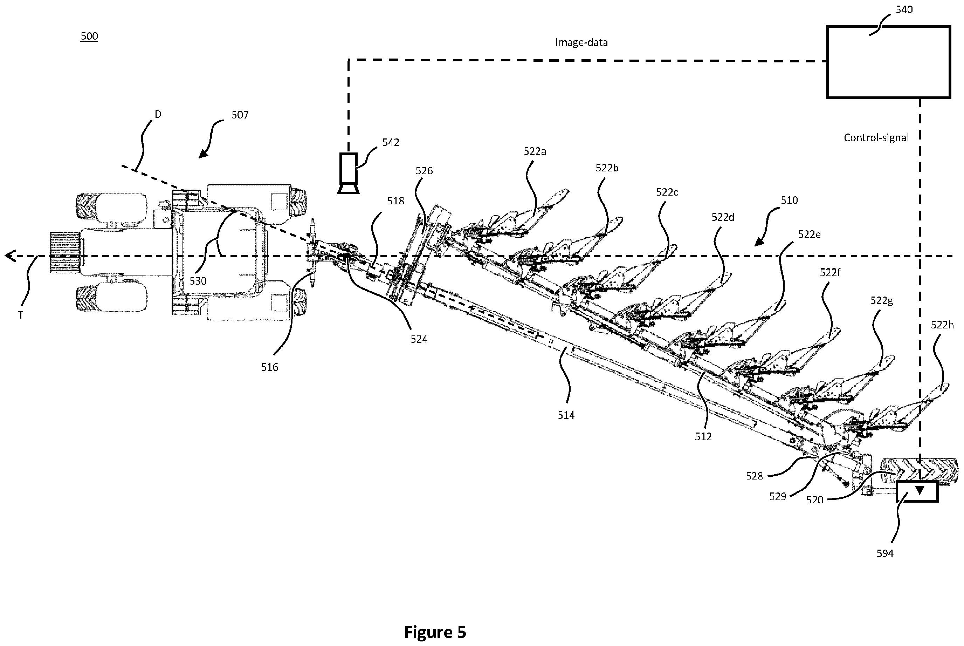

In a normal operation, a longitudinal axis L1 of the main frame 12 is arranged at an angle α with respect to a longitudinal axis L2 of a corresponding agricultural work vehicle. The longitudinal axis L2 of the agricultural work vehicle is parallel to its direction of travel and therefore represents a direction in which the work vehicle drags or pushes the plough 10. It will be appreciated that the angle α between the longitudinal axis L1 of the main frame 12 and the longitudinal axis L2 of the agricultural work vehicle may be changed by pivoting the main frame 12 about the pivot 81. As mentioned above, such pivotal movement of the frame 12 about the pivot 81 may be effected by means of the driven implement wheel. This will be explained in detail with respect to Figures 4B and 5 below.

Additionally, the plough implement may include a plough-width-adjustment-mechanism 82 comprising a link plate 84, a front part 86 of the main frame 12 and a width adjustment actuator 88. The width adjustment actuator 88 in this embodiment is a hydraulic cylinder. By retracting the width adjustment actuator 88, the front part 86 of the main frame 12 will be drawn closer towards the link plate 84, thereby increasing the angle α between the longitudinal axis L1 of the main frame 12 and the longitudinal axis L2 of the agricultural work vehicle. As the angle α between the longitudinal axes L1, L2 is increased, so is the lateral distance d between the neighbouring plough bodies 22a to 30b. Similarly, if the actuator 88 is extended, the main frame 12 is pivoted counter-clockwise in Figure 1C about the pivot 81, thereby decreasing the angle α between the longitudinal axis L1 of the main frame 12 and the longitudinal axis L2 of the agricultural work vehicle. As the angle α between the longitudinal axis L1 and L2 is decreased, the lateral distance d between the neighbouring plough bodies 22a through to 30b decreases.

Although this is not specifically represented in Figure 1C, it will also be appreciated that as the angle α between the axes L1, L2 is increased, a lateral arrangement of the main frame and the plough bodies 22a to 30b with respect to the agricultural work vehicle (not shown) changes. This is because, as the angle α is manipulated, the centre M of the plough implement is moved along circular segment S. Accordingly, as the angle α is increased, the centre M of the plough implement 10 is moved towards the bottom of Figure 1C. Similarly, if the angle α is decreased, the centre M of the plough implement 10 moves towards the top of Figure 1C.

Referring to Figure 3, there is shown a schematic view of an embodiment of an exemplary agricultural plough system 200. The system 200 may include a control unit 202 installed on and/or otherwise provided in connection with the plough implement 10. In some embodiments, the system may additionally or alternatively include a control unit 204 which is associated with the agricultural work vehicle 7, such as a towing vehicle (e.g. a tractor). Either the control unit 202 associated with the plough implement 10 and/or the control unit 204 associated with the work vehicle 7 may be capable of electronically controlling the operation of one or more components of the plough implement, such as controlling the operation of a prime mover 208 for driving the implement wheel. Similarly, either the control unit 202 of the implement or the control unit 204 of the agricultural work vehicle 7 may be capable of controlling an operation of one or more components of the agricultural work vehicle 7.

The control unit 202 associated with the plough implement 10 may include one or more processors 212 associated with one or more memory devices 214. Similarly, the control unit 204 associated with the agricultural work vehicle 7 may also include one or more processors 216 connected to one or more memory devices 218. The control unit 202 of the plough implement 10 and the control unit 204 of the agricultural work vehicle 7 may communicate with each other as indicated by arrows 220, 222. For example, the control unit 202 of the implement may communicate live data detected by implement sensors 224 to the control unit 204 of the work vehicle. Similarly, the control unit 204 of the agricultural work vehicle 7 may communicate with the control unit 202 of the implement via communication line 220 to forward data determined by work vehicle sensors 226 or forward direct commands of the operator entered via one or more input devices 228. The control unit 204 of the agricultural work vehicle 7 may also be connected to one or more valves 230, such as hydraulic valves. The valves 230 may be part of a hydraulic system (not shown) located on the agricultural work vehicle 7. By controlling the valves 230, the control unit 204 may control a hydraulic fluid supply from the hydraulic system towards the prime mover 208, e.g. a hydraulic motor, of the plough implement 10, via fluid lines 232. Similarly, one or more valves 236 may be located on the plough implement 10 to control one or more actuators of the plough implement 10. Again, the valves 236 may be controlled by the control unit 202 of the plough implement 10 and/or the control unit 204 of the work vehicle 7. It should be appreciated that generally only a single control unit 202 or 204 may be required to control both the plough implement 10 and the agricultural work vehicle 7 together with their corresponding hardware. The control unit(s) may also be located remotely from both the agricultural work vehicle 7 and the plough implement 10.

The control unit 202 of the implement and/or the control unit 204 of the agricultural work vehicle 7 are capable of automatically controlling an operation of a prime mover that is configured to drive the implement wheel of the plough implement. In this specification, the term "automatically controlling" refers to the ability of the control units 202 and/or 204 to activate/deactivate the prime mover 208 independent of an operators' input. Rather, control units 202, 204 are configured to receive plough-orientation-data indicative of an alignment status between one or more parts of the plough implement 10 and the direction of travel. The plough-orientation-data received by the control unit 202 of the plough implement 10 and/or the control unit 204 of the agricultural work vehicle 7 may be provided in various forms and by various sources as described below.

The work vehicle 7 of the system 200 shown in Figure 3 may also include a display 234 to provide feedback to the operator. The display 234 may be used to illustrate the current position of the plough implement 10. According to other embodiments, the control units 202, 204 may also display intended changes to the operation of the prime mover 208. The operator may have the option to override any intended changes to the operation of the prime mover 208 via input devices 228. Yet, it will be appreciated that the operator's input is generally not required for the system 200 to control the operation of the prime mover 208.

On the basis of the plough-orientation-data, the control units 202, 204 may retrieve or calculate a control-signal for operating the prime mover 208 of the implement wheel. To this end, the respective memories 214, 218 of control units 202, 204 may include a look-up table and/or database with an array of suitable control-signals linked to corresponding plough-orientation-data, for instance, that may be received from the sensors 224, 226 described above. Alternatively, or additionally, the memories 214, 218 may include a predetermined algorithm for calculating a suitable control-signal for operating the prime mover 208 on the basis of the plough-orientation-data.

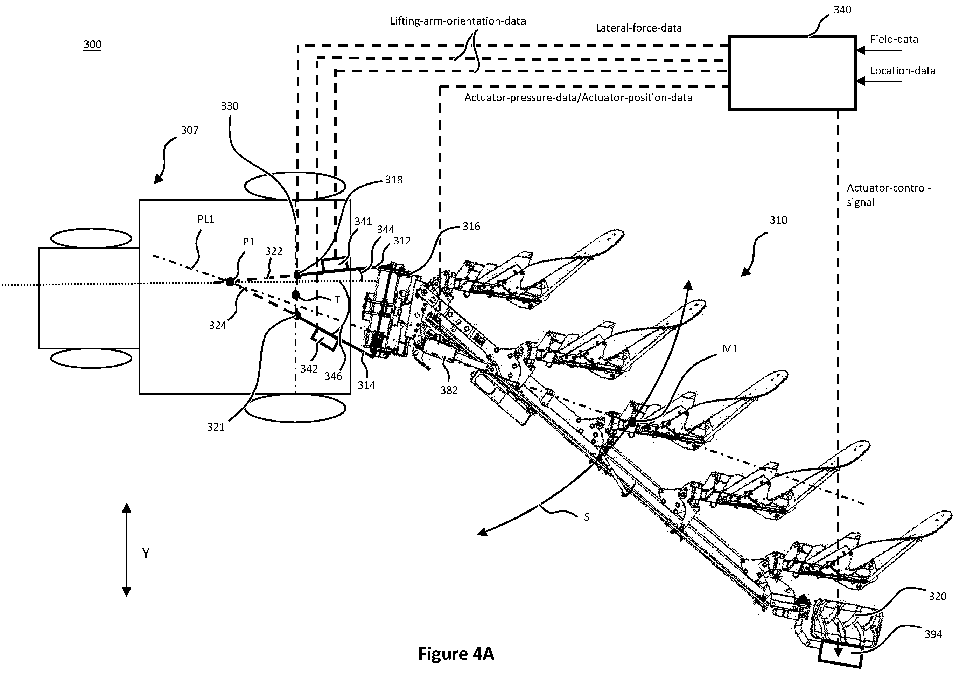

Referring to Figures 4A and 4B, there are shown two schematic plan views of an agricultural plough system 300 according to the present disclosure. Figure 4A shows a schematic plan view of a fully-mounted agricultural plough implement 310 that is misaligned with respect to a corresponding agricultural work vehicle 307. In particular, as will be described below, the pull-line PL1 of the plough implement 310 is misaligned and will cause lateral forces to be introduced into the agricultural system that may cause increased wear and reduced fuel efficiency. By contrast, Figure 4B shows an agricultural plough implement 410 that is correctly aligned with the corresponding agricultural work vehicle 407.

Turning back to Figure 4A, the plough implement 310 is connected to the agricultural work vehicle 307 via a pair of lifting arms 312, 314. The lifting arms 312, 314 are part of the agricultural work vehicle and are releasably connected to the headstock 316 of the plough implement 310.

A first lifting arm 312 is connected to the frame of the agricultural work vehicle via a first connector 318. A second lifting arm 314 is connected to the frame of the agricultural work vehicle 307 via a second connector 321. The pair of lifting arms 312, 314 may pivot with respect to a frame of the agricultural work vehicle 307 in a horizontal plane. It follows that the headstock 316, which is connected to the lifting arms 312, 314, is pivotable in a horizontal plane with respect to the agricultural work vehicle 307.

A straight line 322 defined by the first lifting arm 312 intersects a second straight line 324 defined by the second lifting arm 314 at a point P1, which may be considered as a pull-line-point.

As is known in the art, the plough implement 310 comprises a balance point, as shown by reference numeral M1. The balance point M1 is a fictitious point on the plough implement 310. If the plough implement 310 was pulled by a fictitious chain (not shown) attached to the balance point M1, the interaction between the ground engaging tools (e.g. the plough bodies) and the soil would not generate lateral forces pushing the plough implement 10 to either side. Rather, the lateral forces generated by dragging the ground engaging tools through the soil would then balance each other out, such that the plough implement would maintain a straight path. In reality, of course, the plough implement 310 is pulled by the agricultural work vehicle 307 via the headstock 316 at the front end of the implement frame.

A line connecting the pull-line-point P1 with the balance point M1 of the plough implement 310 may be referred to as the pull-line PL1 of the arrangement shown in Figure 4A. In other words, the pull-line PL1 is defined by the pull-line point P1 and the balance point M1 of the plough implement 310.

Referring to the agricultural work vehicle 307, Figure 4A shows a schematic rear axle 330 for connecting and driving the rear wheels of the agricultural work vehicle 307. In the middle of the rear axle 330, i.e. in the centre between the two rear wheels, there is a central point T.

The plough implement and the agricultural work vehicle 307 are typically correctly aligned if the pull-line intersects the central point T of the rear axle 330. In the example of Figure 4A, this is not the case, such that the plough implement 310 is misaligned with respect to the agricultural work vehicle 307. As a consequence, lateral forces in direction Y may be introduced into the system and result in increased wear and reduced fuel efficiency. The lateral forces may cause a tendency of the agricultural work vehicle 307 to be pushed towards or pulled away from the furrows of the previous working row.

Traditionally, plough operators may have steered the agricultural work vehicle 307 in an opposite direction to compensate for the lateral forces and to keep the agricultural work vehicle on a straight path. The agricultural plough system of the present disclosure is capable of automatically correcting the pull-line to avoid or reduce lateral forces being introduced into the system. The system may do so by repositioning the plough implement 310 with respect to the direction of travel, and thus with respect to the agricultural work vehicle 307. According to the present disclosure, changing the position of the plough implement 310 with respect to the direction of travel is achieved by controlling the speed of the implement wheel 320. Such a change in implement wheel speed will result in a change of an angle between the plough implement frame and the direction of travel and thus directly affect the orientation of the pull-line PL1 as will be described in more detail below. In other words, the present disclosure provides an agricultural plough system with automatic pull-line adjustment via a control of the implement wheel speed.

Turning to Figure 4B, there is shown a plough implement 410, which is correctly aligned with respect to the corresponding agricultural work vehicle 407. In other words, the pull-line PL2 of the plough implement 410 intersects the central point T of the rear axle 430 of the agricultural work vehicle 410. In the example of Figure 4B, this was achieved by changing (decreasing) the angle of the main frame 412 with respect to the direction of travel. As a consequence of the angle adjustment of the main frame 412 (e.g. by means of a deceleration of the driven implement wheel 420), the balance point M2 of the plough implement 410 and the pull-line point P2 are shifted, such that the new, rearranged pull-line PL2 intersects the central point T of the rear axle 430.

In the above example, a change of the angle of the main frame with respect to the direction of travel also changes the orientation of the ground engaging tools (e.g. the plough bodies). In particular, as the angle of the main frame with respect to the direction of travel is reduced, the ground engaging tools are rotated in an anti-clockwise direction in the illustrations of Figures 4A and 4B. Similarly, if the angle of the main frame is increased, the ground engaging tools are rotated in a clockwise direction. This change in the orientation of the ground engaging tools causes repositioning of the balance point with respect to the plough implement 310, 410, as is derivable from a comparison of Figures 4A and 4B. At the same time, moving the main frame by changing the angle of the main frame causes the new balance point M2 to be rotated with respect to the agricultural work vehicle.

It should be noted that the illustrations of Figures 4A and 4B are exaggerated. Typically, the first and second lifting arms 312, 314 and hence the headstock 316 will merely pivot very slightly, e.g. by a few degrees between aligned and misaligned configurations of the agricultural plough system.

The agricultural plough system of the present disclosure comprises a control unit 340 shown in Figure 4A. The control unit 340 is configured to detect misalignment of the pull-line of the agricultural machine. To this end, the control unit 340 is configured to receive plough-orientation-data indicative of an orientation of one or more components of the plough implement 310 with respect to a direction of travel. In the example of Figures 4A and 4B, the plough-orientation-data may be any data enabling the control unit 340 to determine that the pull-line of the agricultural machine is not correctly adjusted. In the embodiment of Figure 4A, the control unit 340 may be connected to one or more angle sensors 341, 342 of the lifting arms 312, 314. In particular, each lifting arm 312, 314 may include an angle sensor for determining an angle between the lifting arm and a direction of travel, i.e. the longitudinal direction of the agricultural work vehicle in a horizontal plane. A first angle sensor 341 may detect a first angle 344 between the first lifting arm 312 and the longitudinal direction of the work vehicle 307. A second angle sensor 342 may detect a second angle 346 between the second lifting arm 314 and the longitudinal direction of the work vehicle 307. Angle measurements taken by the exemplary angle sensor(s) may be provided to the control unit 340 as lifting-arm-orientation-data that is part of the plough-orientation-data.

The control unit 340 may be configured to determine a plough-orientation-status of one or more parts of the plough implement 310 with respect to the direction of travel on the basis of the lifting-arm-orientation-data. This is on the basis that correct pull-line alignment may be achieved if both the first and second lifting arms are equiangularly spaced from the direction of travel, i.e. the longitudinal direction of the work vehicle. Accordingly, the control unit may be configured to determine, on the basis of the lifting-arm-orientation-data, if the first and second angles are substantially identical. To this end, the control unit may be configured to determine a difference between a magnitude of the first angle 344 and a magnitude of the second angle 346. The control unit 340 may define the difference between the two angles 344, 346 as a plough-orientation-parameter on the basis of which the control unit may determine whether or not the plough system/the pull-line is correctly aligned.

The control unit may be configured to compare the plough-orientation-parameter to a target-orientation-parameter. The target-orientation-parameter may be a predetermined parameter stored in a memory of the control unit. In this example, the target-orientation-parameter may be an angle value that represents symmetrical alignment of the first and second lifting arms with respect to the longitudinal direction of the agricultural work vehicle. As described in detail above, an equiangular arrangement of the first and second lifting arms is desirable so as to achieve a correctly adjusted pull-line. Accordingly, in this embodiment, the target-orientation-parameter may be defined by the control unit as 0 degrees. In other words, during this comparison step, the control unit may determine whether or not the first and second angles have the same magnitude. If the first and second angles have the same magnitude, the plough-orientation-parameter of this embodiment will be 0 degrees, as is the target-orientation-parameter. The control unit will then determine a plough-orientation-status on the basis of the result of the comparison between the plough-orientation-parameter and the target-orientation-parameter.

In some embodiments, the control unit may be configured to compare a difference between the plough-orientation-parameter and the target-orientation-parameter to an orientation-parameter-threshold. For instance the orientation-parameter-threshold may be 1 degree. Accordingly, if the difference between the plough-orientation-parameter and the target-orientation-parameter is less than 1 degree, the control unit 340 may determine a plough-orientation-status that is representative of a correct orientation of the plough implement. Should the first and second angles be of a sufficiently different magnitude, this will be represented in the plough-orientation-parameter, which will then likely differ from the target-orientation-parameter. If this difference is more than 1 degree, the control unit 340 may determine a plough-orientation-status that is representative of an incorrect orientation of the plough implement 310 with respect to the direction of travel, i.e. with respect to the work vehicle 307.

In an alternative example, the lifting-arm-orientation-data may only include measurements of the first or second angle. The control unit 340 may then be configured to define one value, or an average of several values over time, of the lifting-arm-orientation-data directly as plough-orientation-parameter. Depending on the type and construction of the agricultural work vehicle, the lifting arms are typically arranged at an angle of around 10 to 20 degrees with respect to a longitudinal direction of the agricultural work vehicle. In one example, the control unit 340 may, thus, compare the plough-orientation-parameter to a target-orientation-parameter such as 15 degrees. The control unit 340 may be configured to determine the plough-orientation-status on the basis of the comparison result between the plough-orientation-parameter, such as the first and second angles discussed above, and the target-orientation-parameter. To this end, the control unit 340 may compare the first angle 344, i.e. a first plough-orientation-parameter with the said target-orientation-parameter. Alternatively, or additionally, the control unit 340 may compare the second angle, i.e. a second plough-orientation-parameter, with the target-orientation-parameter. If the plough-orientation-parameter(s) is(are) substantially equal to the target-orientation-parameter, e.g. the measured angle between the respective lifting-arm and the longitudinal direction of the agricultural work vehicle is around 15 degrees, the control unit 340 may determine a plough-orientation-status that is indicative of a correct alignment between the plough implement and the agricultural work vehicle. If, however, the plough-orientation-parameter differs significantly from the target-orientation-parameter, the control unit 340 may determine a plough-orientation-status that is indicative of an unsuitable orientation of one or more parts of the plough implement 310. The control unit 340 may be configured to compare the difference between the plough-orientation-parameter and the target-orientation-parameter with an orientation-parameter-threshold as discussed above.

In some embodiments, the control unit 340 may additionally or alternatively be connected to force sensors arranged at the connectors 318, 321 of the lifting arms 312, 314. The force sensors may be configured to determine lateral forces transferred to the agricultural work vehicle 307 due to a misalignment of the plough implement 310 with respect to the agricultural work vehicle 307. In one embodiment, the force sensors may be deflection sensors attached to bearings of the connectors 318, 321. Force measurements taken by the exemplary force sensors may be provided to the control unit 340 as lateral-force-data that is part of the plough-orientation-data. The control unit 340 may be configured to define one value, or an average of several values over time, of the lateral-force-data as the plough-orientation-parameter and compare it to a predetermined target-orientation-parameter. The target-orientation-parameter of this embodiment may be 0 Newton, on the basis that a correctly oriented plough system should not generate significant lateral forces during operation. The control unit 340 may compare a difference between the target-orientation-parameter and the plough-orientation-parameter with an alignment-parameter-threshold. In one example, the orientation-parameter-threshold is 5 Newton, such that the control unit 340 will determine a plough-orientation-status representative of an undesirable orientation if one or more values of the lateral-force-data exceed the alignment-parameter-threshold. The control unit 340 may then take remedial action by appropriate control of the prime mover 394 as will be explained in more detail below.

In another example, the control unit 340 may be adapted to receive pressure-data associated with working fluid pressures of one or more of the actuator mechanisms of the agricultural machinery. In the example of Figure 4A, the control unit 340 may be connected to a pressure gauge of a plough-width-adjustment-mechanism 382 of the plough implement 310. The plough-width-adjustment-mechanism 382 may be identical to the plough-width-adjustment-mechanism described with reference to Figure 1C. The pressure-data received from the plough-width-adjustment-mechanism 382 may be part of the plough-orientation-data on the basis of which the control unit 340 may determine the plough-orientation-status between the plough implement 310 and the work vehicle 307. In one example, the control unit 340 may be configured to use the pressure-data received from the plough-width-adjustment-mechanism 382 to determine a lateral force value that may be used by the control unit in an identical way to the lateral-force-data described above.

In yet another embodiment, the control unit 340 may be configured to determine the plough-orientation-status between the plough implement 310 and the work vehicle 307 directly on the basis of the pressure-data received from the plough-width-actuator-mechanism 382. In this regard, it will be appreciated that the working fluid pressure within the plough-width-actuator-mechanism 382 is representative of a lateral force acting on the plough frame and thus the plough system during operation. The working fluid pressure within the plough-width-adjustment-mechanism 382 is thus indicative of an orientation status of the plough system. Accordingly, in some embodiments, the control unit 340 may be configured to determine a target-working-fluid-pressure that is representative of the plough implement 310 being correctly aligned with the corresponding work vehicle 307. In some cases, this target-working-fluid-pressure may be indicative of no lateral forces being introduced into the plough system. The control unit 340 may be configured to define one value, or an average of several values over time, of the pressure-data received from the pressure gauge as the plough-orientation-parameter. The control unit 340 may compare the plough-orientation-parameter with the target-working-fluid-pressure. The control unit 340 may be configured to determine a misalignment status if a difference between the plough-orientation-parameter and the target-working-fluid-pressure exceeds an actuator-pressure-threshold. If, on the above basis, the control unit 340 determines a misalignment between the plough implement 310 and the agricultural work vehicle 307, the control unit 340 may take remedial action described in more detail below.

The above examples of the plough-orientation-data provided to the control unit 340 may be referred to as plough-data associated with current operating conditions of the agricultural plough system 300. Of course, it is also feasible to provide the control unit 340 with any other plough-data as part of the plough-orientation-data, as long as it enables the control unit to determine an alignment status between the plough implement 310 and the agricultural work vehicle 307.

The control unit 340 may also be provided with field-data (not shown) as part of the plough-orientation-data. In this regard, it should be appreciated that a change in ground conditions, such as the moisture content of the soil or the soil density, may cause a change in the orientation of the plough implement and or may introduce undesirable, lateral forces into the system. In other words, when the ground conditions change, so will the location of the balance point of the plough implement, which in turn affects the plough-orientation-status. This is because the drag force experienced by the plough frame 310 may vary depending on the ground conditions. A non-exhaustive list of field-data that may affect the alignment between the plough implement and the agricultural work vehicle is shown below.

In one embodiment, the field-data may be indicative of moisture levels of the soil. In one example, such soil-moisture-data may be measured by a conductivity sensor and provided to the control unit. The control unit may be configured to compare the values of the soil-moisture-data to identify any (significant) changes in the soil moisture content along the trajectory of the agricultural machinery. It will be appreciated that a change in soil moisture content may lead to a change in orientation of one or more parts of the plough implement. Accordingly, the control unit may be configured to take remedial action if the control unit determines a significant change in the soil moisture content, on the basis of the soil-moisture-data. In particular, the control unit may be configured to compare the derivate of a soil moisture content graph of the soil-moisture-data with a moisture-level-change-threshold. If the derivate of the soil moisture content exceeds the soil-moisture-change-threshold, the control unit may take remedial action as will be described in more detail below.

Alternatively, the control unit may define one or an average of several values of the soil-moisture-data as the plough-orientation-parameter. The control unit or the operator may define a specific soil moisture value as a target-orientation-parameter. The control unit may be configured to compare the plough-orientation-parameter with the target-orientation-parameter. If a difference between the plough-orientation-parameter and the target-orientation-parameter exceeds a moisture-content-threshold, the control unit may determine a plough-orientation-status that is indicative of a present or future change in the orientation of one or more parts of the plough implement and take appropriate remedial action.

In another embodiment, the control unit may receive soil-compaction-data indicative of soil compaction levels of the ground across which the agricultural machinery is moved. The soil-compaction-data may be provided by a soil density sensor arranged on the agricultural machinery or may be derivable from a database that contains soil compaction levels of the field in question. Similar to the soil-moisture-data, the control unit may be configured to monitor the soil-compaction-data for any (significant) changes in the level of soil compaction. This is because changes in the soil compaction levels will affect the drag of the plough implement and, therefore, may change the orientation of one or more parts of the plough implement. For example, increased soil density will increase drag of the plough implement and can lead to pivoting movements of the headstock together with the lifting arms. Such a change in orientation of the headstock and thus the main frame of the plough may inversely affect the plough efficiency and service time of the plough system. Accordingly, the control unit may be configured to determine the derivate of a soil compaction graph representative of the values of the soil-compaction-data and compare the derivate values to a soil-compaction-change-threshold. If the change in soil compaction levels, i.e. the derivate of the values of the soil-compaction-data, exceeds the soil-compaction-change-threshold, the control unit may determine a plough-orientation-status indicating that the one or more parts of the plough implement are not correctly oriented. On the basis of such a plough-orientation-status, the control unit may take remedial action as will be described in more detail below.

Alternatively, the control unit may define one or an average of several values of the soil-density-data as the plough-orientation-parameter. The control unit or the operator may define a specific soil density value as a target-orientation-parameter. The control unit may be configured to compare the plough-orientation-parameter with the target-orientation-parameter. If a difference between the plough-orientation-parameter and the target-orientation-parameter exceeds a soil-density-threshold, the control unit may determine a plough-orientation-status that is indicative of a misalignment and take appropriate remedial action.

In another embodiment, the field-data may comprise ground-contour-data. The ground-contour-data may be representative of a gradient of the ground across which the agricultural machinery is moved. It will be appreciated that the balance point of the agricultural implement will change depending on the gradient of the field. In particular, uneven field conditions may change the working depth of the plough bodies throughout the process, which in turn may change the position of one or more parts of the plough implement. Accordingly, the control unit may be configured to monitor the ground-contour-data. More specifically, the control unit may be configured to determine the derivate of the values of the ground-contour-data to determine significant changes of a gradient of a field across which the agricultural implement is being pulled. If the derivate of the values of the ground-contour-data exceed a gradient-change-threshold, the control unit may determine a plough-orientation-status representative of a misalignment between the agricultural work vehicle and the plough implement. Based on this plough-orientation-status, the control unit may take appropriate remedial action.

The field-data described above may be live data determined as the agricultural machinery is moved across the field. In some examples, the live data may be determined by optical sensors, such as optical sensors 74 and 76 schematically shown in Figure 2.

In other embodiments, the field-data may be prior-field-data that was acquired prior to the ploughing operation. The prior-field-data may have been acquired in previous runs of the field or by other machinery, such as other tillage devices or dedicated measurement devices, such as measurement drones.

The prior-field-data may be stored in a database that is associated with the control unit. The prior-field-data may be stored as map-data in which the field conditions, such as the soil density, the moisture content of the soil or the ground-contours are stored together with their respective locations on the field. Each point on the virtual map represented by the map-data may be considered as candidate-field-data accessible by the control unit. The control unit may receive location-data that is indicative of a position of the agricultural work vehicle and/or the plough implement within the field. The location-data may be provided by a location-sensor, such as a GPS sensor. The control unit may be configured to match the location-data with the map-data to determine the candidate-field-data that applies to the current position of the agricultural machinery. According to this embodiment, the control unit may be able to predict when one or more parts of the plough implement may be misoriented in future. This is because the control unit may, on the basis of the direction of travel and the speed of travel of the agricultural machinery, be able to determine when significant changes in the field conditions (represented by the field-data) will necessitate a correction of the plough implement orientation. In other words, the control unit may, on the basis of the prior-field-data (which may be part of the plough-orientation-data), be able to determine a future plough-orientation-status. For instance, if the control unit determines that the agricultural machinery will reach a point on the field that (according to the prior-field-data) shows a significant change in ground conditions in say one minute, the control unit may determine that the plough-orientation-status will change in said one minute and may thus prepare to take appropriate remedial action.

As mentioned above, if the control unit determines a plough-orientation-status representative of an undesirable orientation of one or more parts of the agricultural implement, the control unit may take remedial action. In one variant, the control unit may take remedial action by informing the operator, e.g. via the display 234 of the work vehicle, that a misalignment has occurred, and remedial required. The control unit may also be configured to provide suggested adjustments of the plough system to the operator.

Alternatively, the control unit may automatically take remedial action (e.g. without an input of the operator). The control unit may automatically control an operation of the at least one prime mover, such as the prime mover 394 of the implement wheel 320 shown in Figure 4A. To this end, the control unit may determine a control-signal for operating the prime mover 394 so as to drive the implement wheel 320 in a way that supports correct alignment of one or more parts of the plough implement with the agricultural work vehicle. The control unit may determine the control-signal on the basis of the plough-orientation-data discussed above. For instance, the control unit may be configured to determine a control-signal that will maintain the position of the plough implement if the plough-orientation-status is indicative of a correct alignment between a part of the implement (e.g. the main frame of the implement) and the direction of travel. If the plough-orientation-status is representative of a misalignment, the control unit may determine a control-signal for operating the prime mover so as to compensate for the misalignment.

In one embodiment, the control unit 340 is configured to determine a control-signal for operating the prime mover in such a way that the at least one implement wheel moves faster than one or more driven wheels of a corresponding work vehicle, if the difference between the above plough-orientation-parameter and the target-orientation-parameter exceeds a first plough-orientation-threshold. For example, as explained above, the plough-orientation-data may comprise lifting-arm-orientation-data. The control unit 340 may be configured to determine, on the basis of the lifting-arm-orientation-data, if the first and second angles explained above are substantially identical. To this end, the control unit may be configured to determine a difference between a magnitude of the first angle 344 and a magnitude of the second angle 346. The control unit 340 may define the difference between the two angles 344, 346 as the plough-orientation-parameter. As mentioned before, it is desirable to have identical first and second angles 344, 346. Accordingly, the target-orientation-parameter may be set to 0 degrees, meaning that a difference between the magnitude of the first angle 344 and a magnitude of the second angle 346 (i.e. the plough-orientation-parameter) should preferably be 0 degrees. If the control unit 340 determines that the difference between the magnitude of the first angle 344 and a magnitude of the second angle 346 is above or below corresponding plough-orientation-thresholds (e.g. - 5/+5 degrees), the control unit 340 may take remedial action to reposition one or more parts of the plough implement.

In the above example, if the difference between the plough-orientation-parameter and the target-orientation-parameter is more than a first plough-orientation-threshold (e.g. more than 5 degrees), then the magnitude of the first angle 344 is more than 5 degrees larger than the magnitude of the second angle 346. It follows that the headstock 316 is pivoted/offset to the right of the agricultural work vehicle 307. The control unit 340 may re-orientate the plough implement (i.e. the headstock and the frame) by operating the implement wheel 320. In this example, if the angle difference exceeds 5 degrees, the control unit may generate a control-signal for operating the prime mover to increase the speed of the implement wheel 320 in the direction of travel. Increasing the speed of the implement wheel 320 will decrease the drag of the plough implement and may cause realignment of the pull-line. In other words, increasing the speed of the implement wheel 320, may cause the headstock 316 to pivot to the left and thus decrease the difference in the magnitude between the first angle 344 and the second angle 346. This, in turn, acts to re-align the plough implement with the work vehicle.

In another embodiment, the control unit 340 is configured to determine a control-signal for operating the prime mover in such a way that the at least one implement wheel moves slower than one or more driven wheels of a corresponding work vehicle, if the difference between the above plough-orientation-parameter and the target-orientation-parameter falls below a second plough-orientation-threshold. Turning back to the above example, the plough-orientation-parameter is the difference between a magnitude of the first angle 344 and a magnitude of the second angle 346. If the difference between the plough-orientation-parameter and the target-orientation-parameter is less than a second plough-orientation-threshold (e.g. -5 degrees), then the magnitude of the first angle 344 is more than 5 degrees smaller than the magnitude of the second angle 346. It follows that the headstock 316 is pivoted/offset to the left of the agricultural work vehicle 307 of Figure 4A. The control unit 340 may re-orientate the plough implement (i.e. the headstock and the frame) by operating the implement wheel 320. In this example, if the angle difference falls below the second plough-orientation-threshold, the control unit may generate a control-signal for operating the prime mover to decrease the speed of the implement wheel 320. Decreasing the speed of the implement wheel 320 will increase drag of the plough implement and may cause realignment of the pull-line. In other words, decreasing the speed of the implement wheel 320 may cause the headstock 316 to pivot to the right. This may cause a decrease in the difference between the first angle 344 and the second angle 346.

Decreasing the speed of the implement wheel 320 may be achieved in several ways. If, when the control unit determines that a decrease in implement wheel speed 320 is required, the implement wheel 320 is already being driven by the prime mover 394, the control unit may decelerate (i.e. decrease the speed of) the implement 320 by changing the control-signal such that the prime mover 394 reduces the drive power applied to the implement wheel 320. Alternatively, the control unit 340 may determine that no more drive power should be applied to the implement wheel 320 by the prime mover 340. In such a case the control unit may generate a control-signal for stopping the prime mover 340. In yet another alternative, the control unit may be configured to actively break the implement wheel if a decrease in implement wheel speed 320 is required. To this end, the plough system may comprise a brake system for actively decelerating the at least one implement wheel 320. The control unit 340 may then be configured to activate the braking system in such a way that the at least one implement wheel 320 is decelerated, if the difference between the plough-orientation-parameter and the target-orientation-parameter falls below the second plough-orientation-threshold. The control unit may be configured to receive drive-data indicative of a current drive speed of the at least one implement wheel to determine if the implement wheel 320 is currently being driven and at what speed.

The control unit may be configured to accelerate, decelerate, or maintain the speed of the implement wheel 320 on the basis of the plough-orientation-data, particularly on the basis of a difference between the plough-orientation-parameter and the target-orientation-parameter. The control unit will determine an appropriate control-signal for driving the implement wheel 320 in such a way that a desirable orientation of one or more parts of the plough implement is achieved. In other words, the control-signal determined by the control unit 340 for operating the prime mover 394 may be set in such a way that a difference between the plough-orientation-parameter and the target-orientation-parameter will be reduced by the resulting drive speed of the implement wheel 320. It follows that the operator no longer needs to manually adjust the orientation of one or more parts of the plough implement, e.g. by adjusting the "plough width", etc. Rather, the control unit 340 is configured to compensate for any potential misorientation of the plough implement parts by means of a suitable operation of the prime mover of the driven implement wheel.

In determining an appropriate control-signal, the control unit may refer to the plough-orientation-data and calculate or look up the appropriate remedial action. In one example, the control unit may determine the control-signal on the basis of a difference between the plough-orientation-parameter and the target-orientation-parameter. In other words, the control unit may determine how significant the misalignment between the plough implement and the direction of travel is on the basis of the difference between the plough-orientation-parameter and the target-orientation-parameter. The control unit may be configured to determine a control-signal for changing the operation of the prime mover more significantly, if the difference between the plough-orientation-parameter and the target-orientation-parameter is higher. In other words, the higher the difference between the plough-orientation-parameter and the target-orientation-parameter is, the more change in the speed of the implement wheel may be caused by the control unit.

Turning to Figure 5, there is shown another embodiment of a plough system according to the present disclosure. The plough system 500 shown in Figure 5 comprises an agricultural work vehicle 507, such as a tractor. An agricultural plough implement 510 is attached to the agricultural work vehicle 507. The plough implement 510 of the embodiment shown in Figure 5 is a semi-mounted plough implement. This is in contrast to the mounted or fully-mounted plough implement 310 shown in Figure 4A, for example. The semi-mounted plough implement 510 differs from the fully-mounted plough implement 310 in that the implement wheel 520 will always remain in contact with the soil, even during a headland turning routine. As described above, the fully-mounted plough implement 310, by contrast, has an implement wheel 320, which is lifted from the soil during the headland turning routine.

The semi-mounted plough implement 510 of Figure 5, comprises and implement wheel 520, which is connected to a base frame 514. The base frame 514 is connected to a headstock 516 of the plough implement 510 via a drawbar 518. The base frame 514 further acts as a support for a main frame 512. The main frame 512 carries one or more ground engaging tools, such as the plough bodies 522a, 522b, 522c, 522d, 522e, 522f, 522g, 522h.

The plough implement 510 shown in Figure 5 is an eight furrow plough implement. The plough bodies 522a, 522b, 522c, 522d, 522e, 522f, 522g, and 522h are pivotable about the base frame 514 together with the main frame 512. Such a pivotable movement may be activated by a reversal actuator 526, which is arranged between the main frame 512 and the base frame 514. During reversal of the plough implement 510, the plough bodies 522a, 522b, 522c, 522d, 522e, 522f, 522g, 522h, together with the main frame 512, are transferred from their first position shown in Figure 5a (e.g. on the right of the base frame 514) into a second position (not shown). In the second position, the plough bodies 522a, 522b, 522c, 522d, 522e, 522f, 522g, 522h are positioned, together with the main frame 512, on the left side of the base frame 514. Throughout this reversal process, the implement wheel 520 remains in contact with the soil.

Similar to the fully-mounted plough implement 310, the semi-mounted plough implement 510 of Figure 5 is connected to the rear of the agricultural work vehicle 507 via a headstock 516. The headstock 516 may be connected to a three-point-linkage of the agricultural work vehicle 507. The three-point-linkage is not illustrated for simplicity.

The drawbar 518, which connects the base frame 514 of the plough implement 510 with the headstock 516, is pivotably connected to the headstock 516. Accordingly, the drawbar 518 as well as the base frame 514 and the main frame 512 are pivotable with respect to the headstock 516 about a vertical axis 524. Depending on various parameters, such as an orientation of the plough bodies with respect to the direction of travel or the soil density, the orientation of one or more parts of the plough implement 510 with respect to the direction of travel may change. This is because lateral forces created by the plough bodies may change depending on their orientation, the soil density, etc. With the drawbar 518 being freely pivotable about the vertical axis 524 with respect to the headstock 516, a change in lateral forces caused by the plough bodies may cause pivoting movement of the drawbar 518 (and thus the base frame 514) with respect to the headstock 516.

In Figure 5, the direction of travel T is indicated by an arrow. In particular, the direction of travel is aligned with a longitudinal axis of the agricultural work vehicle 507. In the position shown in Figure 5, a longitudinal axis D of the drawbar 518 extends at an angle 530 with respect to the direction of travel T. As mentioned above, this angle 530 between the longitudinal axis D of the drawbar 518 and the direction of travel T is subject to change during the ploughing process, depending on the ground conditions and/or the settings of the plough implement 510.

The agricultural plough system 500 of Figure 5 comprises a control unit 540, which is configured to control the orientation of the plough implement 510 with respect to the direction of travel T. In particular, the control unit 540 of Figure 5 is configured to control the angle 530 between the longitudinal direction D of the drawbar 518 and the direction of travel T. This is particularly advantageous because the angle 530 between the drawbar 518 and the direction of travel T can have a significant impact on the ploughing efficiency and the service life of the agricultural plough.

The agricultural plough system 500 may include an image-sensor 542 for determining image-data representative of an orientation of the plough implement 510 in a horizontal plane. In particular, the image-sensor 542 may determine image-data representative of the angle 530 between the longitudinal axis D of the drawbar 518 and the direction of travel T. Of course, the image-sensor 542 is only one possible solution of how to monitor the orientation of the drawbar 518 with respect to the direction of travel. Other sensors may include angle sensors arranged within the pivot between the headstock 516 and the drawbar 518.

The control unit 540 of Figure 5 is configured to receive the image-data of the image-sensor 542 as plough-orientation-data. The control unit 540 may be configured to analyse the image-data to extract angle-data. In a simple embodiment, the control unit 540 may be configured to calculate the direction of travel T and the direction of the longitudinal axis D of the drawbar on the basis of the image-data received from the image-sensor. The control unit 540 may then calculate the angle 530 between the direction of travel and the longitudinal axis D of the drawbar 518. The control unit 540 may periodically or continuously receive image-data from the image-sensor and periodically or continuously calculate values of the angle 530.

The control unit 540 may be configured to determine the plough-orientation-parameter mentioned above as one or an average of several value(s) of the angles 530 calculated on the basis of the image-data. The control unit 540 may be configured to compare this plough-orientation-parameter to a target-orientation-parameter. In one example, the target-orientation-parameter may be 30 degrees, such that significant deviations from the target-orientation-parameter may cause the control unit 540 to take remedial action. To this end, the control unit may compare a difference between the plough-orientation-parameter and the target-orientation-parameter to an angle-difference-threshold. If the difference between the plough-orientation-parameter and the target-orientation-parameter exceeds the angle-difference-threshold, the control unit 540 may determine a plough-orientation-status that is representative of a misalignment between the drawbar 518 and the direction of travel T.

If the control unit 540 detects, on the basis of the plough-orientation-data (e.g. the image-data) that the drawbar 518 is misaligned with respect to the direction of travel T, the control unit 540 may take remedial action similar to the remedial actions described above. In particular, the control unit is configured to determine a control-signal that is applicable to operate a prime mover 594 for driving the implement wheel 520 in a way that will re-align the drawbar with the direction of travel (e.g. at an angle of 30 degrees).

In one embodiment, the control unit 540 may be configured to accelerate the implement wheel 520 by means of the prime mover 594 if, on the basis of the plough-orientation-data, the control unit determines that the angle 530 is smaller than expected. Similarly, if the control unit 540 determines that the angle 530 is larger than expected, the control unit 540 may decelerate the implement wheel 520, either by reducing the drive power of the prime mover 594 or by actively braking the implement wheel 520 (e.g. by means of an implement wheel brake). It will be appreciated that the control unit 540 may determine that the angle 530 is too large, if a difference between the angle 530 (i.e. plough-orientation-parameter) and a target angle (i.e. the target-orientation-parameter), is more than an angle-difference-threshold of, for example, 2 degrees. Similarly, the control unit 540 may be configured to determine that the angle is too small if the difference between the angle 530 and the target angle is less than -2 degrees.

Although the control of the implement wheel 520 of the semi-mounted plough implement 510 of Figure 5 has been described with respect to the image-data provided by the image-sensor 542 only, it should be understood that a variety of other plough-orientation-data may be used to control the orientation of the plough implement 510. In particular, it is equivalently feasible to utilise the lateral-force-data, the lifting-arm-orientation-data, or the field-data mentioned above as a basis for the plough-orientation-data, to control operation of the prime mover 594 for driving the implement wheel 520 of the plough implement 510.

The plough implement 510 shown in Figure 5 comprises first and second actuators 528, 529 for adjusting an angle of the implement wheel 520 relative to an orientation of the plough bodies 522a, 522b, 522c, 522d, 522e, 522f, 522g, 522h. In some examples, the control unit is configured to determine, on the basis of the plough-orientation-data, an implement wheel angle-control-signal for controlling the angle of the implement wheel 520 with respect to an orientation of the at least one plough body.

The control unit 540 may determine the plough-orientation-data in a similar manner as described above, e.g. via an image-sensor 542. If the control unit 540 detects, on the basis of the plough-orientation-data (e.g. the image-data) that the drawbar 518 is misaligned with respect to the direction of travel T, the control unit 540 may take remedial action by determining a control-signal that is applicable to operate the prime mover 594 for driving the implement wheel 520 in a way that will re-align the drawbar with the direction of travel (e.g. at an angle of 30 degrees). At the same time, the control unit may determine a suitable angle-control-signal for adjusting the angle/orientation of the implement wheel 320 in such a way that it will support re-alignment of the drawbar with the direction of travel.

If, for example, the angle of the drawbar with respect to the direction of travel is higher than required, e.g. above 30 degrees, the control-unit may determine a wheel angle-control-signal for decreasing the drawbar angle, e.g. by turning the implement wheel 520 clockwise (in the illustration of Figure 5), by means of one or both actuators 528, 529. If, on the other hand, the angle of the drawbar with respect to the direction of travel is lower than required, e.g. below 30 degrees, the control-unit may determine a wheel angle-control-signal for increasing the drawbar angle, e.g. by turning the implement wheel 520 anti-clockwise (in the illustration of Figure 5), by means of one or both actuators 528, 529.

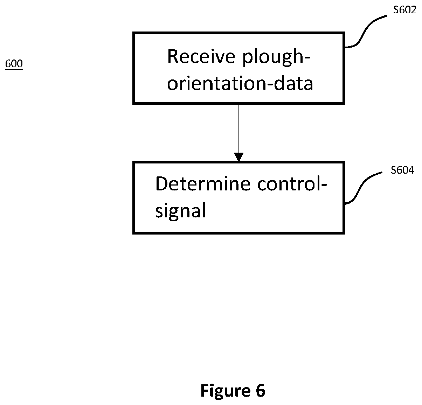

Referring to Figure 6, there is shown a schematic flowchart of a computer-implemented method 600 of the present disclosure. The method 600 is suitable for operating an agricultural plough system comprising an agricultural work vehicle and a plough implement connected to the agricultural work vehicle, the plough implement comprising at least one implement wheel. The agricultural plough system further comprises at least one prime mover for driving the at least one implement wheel.

In a first step S602, the method of Figure 6 comprises receiving plough-orientation-data indicative of a current or future orientation of one or more parts of the plough implement with respect to the direction of travel. In some embodiments, such plough-orientation-data may be lifting-arm-orientation-data or image-data as described above.

In a second step S604 of the method 600, the method includes determining a control-signal for controlling an operation of the at least one prime mover for driving the at least one implement wheel. In the above example, the control unit may compare one or more of the first and/or second angle measurements (i.e. the plough-orientation-parameter) with a desired angle (i.e. the target-orientation-parameter) and produce a control-signal for controlling the prime mover. The control-signal is suitable for adjusting the first and/or second angles to the desired angle via a speed adjustment of the implement wheel. Generally, the control unit may be configured to determine a control-signal for changing the drive power of the prime mover more significantly, the higher a difference between the plough-orientation-parameter and the target-orientation-parameter is.

Preferences and options for a given aspect, feature or parameter of the invention should, unless the context indicates otherwise, be regarded as having been disclosed in combination with any and all preferences and options for all other aspects, features and parameters of the disclosure.

## Claims

1. An agricultural plough system (300, 500) comprising:
a plough implement (310, 510) connectable to an agricultural work vehicle (307, 507), the plough implement comprising at least one implement wheel (320, 520);
at least one prime mover (394, 594) for driving the at least one implement wheel (320, 520); and
a control unit (340, 540) that is configured to:
receive plough-orientation-data indicative of an orientation of one or more components of the plough implement (310, 510) with respect to a direction of travel;
determine, on the basis of the plough-orientation-data, a control-signal for controlling an operation of the at least one prime mover (394, 594).

2. The agricultural plough system (500) of Claim 1, wherein the plough implement comprises a drawbar (518), wherein the plough-orientation-data is representative of a horizontal angle between the drawbar (518) and the direction of travel (T).

3. The agricultural plough system (300, 500) of Claim 1 or 2, wherein the plough-orientation-data comprises one or more of:
image-data representative of an orientation of the plough implement in a horizontal plane;
actuator-position-data that is representative of a position of a plough-width-adjustment-actuator;
actuator-pressure-data associated with working fluid pressures of a plough-width-adjustment-actuator;
lateral-force-data representative of lateral forces introduced into the plough system when the plough implement is in use;
lifting-arm-orientation-data associated with an orientation of one or more lifting arms of the agricultural vehicle.

4. The agricultural plough system (300, 500) of any one of Claims 1 to 3, wherein the plough implement is a semi-mounted plough implement (510) comprising a headstock (516) and a drawbar (518), said drawbar (518) being pivotably connected to the headstock (516), and wherein the plough-orientation-data comprises drawbar-orientation-data that is representative of an orientation of the drawbar (518) with respect to the direction of travel (T).

5. The agricultural plough system (300, 500) of any of Claims 1 to 4, wherein the control unit (340, 540) is further configured to:
receive field-data associated with ground conditions of a field across which the agricultural plough system is moved when in use; and
determine, on the basis of the plough-orientation-data and the field-data, the control-signal for controlling an operation of the at least one prime mover (394, 594).

6. The agricultural plough system (300, 500) of Claim 5, wherein the agricultural plough system comprises a database including a plurality of candidate-field-data, and wherein the control unit is configured to:
receive location-data indicative of a position of the plough implement and/or an associated agricultural work vehicle within the field; and
use the location-data to select one of the candidate-field-data as the field-data.

7. The agricultural plough system (300, 500) of any of Claims 1 to 6, wherein the control unit is configured to:
determine a plough-orientation-parameter on the basis of the plough-orientation-data;
compare the plough-orientation-parameter to a target-orientation-parameter; and
determine a plough-orientation-status on the basis of a comparison result.

8. The agricultural plough system (300, 500) of Claim 7, wherein the control unit is configured to calculate the plough-orientation-parameter as an average of a plurality of values of the plough-orientation-data.

9. The agricultural plough system (300, 500) of Claim 7 or 8, wherein the control unit is configured to:
determine a difference between the plough-orientation-parameter and the target-orientation-parameter;
determine the control-signal on the basis of the difference between the plough-orientation-parameter and the target-orientation-parameter.

10. The agricultural plough system (300, 500) of Claim 9, wherein the control unit is configured to:
determine a control-signal for operating the prime mover (394, 594) in such a way that the at least one implement wheel moves faster than one or more driven wheels of a corresponding work vehicle, if the difference between the plough-orientation-parameter and the target-orientation-parameter exceeds a first plough-orientation-threshold; and/or
determine a control-signal for operating the prime mover (394, 594) in such a way that the at least one implement wheel moves slower than one or more driven wheels of a corresponding work vehicle, if the difference between the plough-orientation-parameter and the target-orientation-parameter falls below a second plough-orientation-threshold.

11. The agricultural plough system (300, 500) of Claim 9 or 10, wherein the plough system comprises a brake system for decelerating the at least one implement wheel, and wherein the control unit is configured to:
activate the brake system in such a way that the at least one implement wheel (320, 520) is decelerated, if the difference between the plough-orientation-parameter and the target-orientation-parameter falls below a second plough-orientation-threshold.

12. The agricultural plough system (300, 500) of any of Claims 1 to 11, wherein the control unit is configured to:
receive drive-data indicative of a current drive speed of the at least one implement wheel; and
determine the control-signal on the basis of the plough-orientation-data and the drive-data.

13. The agricultural plough system (300) of any of Claims 1 to 12, wherein the at least one prime mover (394) includes a hydraulic motor, and wherein the plough system comprises a hydraulic fluid supply controller for selectively suppling hydraulic fluid to the hydraulic motor, and wherein the control-unit is configured to provide the control-signal to the hydraulic fluid supply controller.

14. The agricultural plough system of any of Claims 1 to 13, wherein the plough system (300, 500) at least one plough body and at least one actuator for adjusting an angle of the implement wheel (320, 520) relative to an orientation of the at least one plough body, and wherein the control unit (340, 540) is configured to:
determine, on the basis of the plough-orientation-data, an implement wheel angle-control-signal for controlling the angle of the implement wheel (320, 520) with respect to an orientation of the at least one plough body.

15. A computer-implemented method of operating an agricultural plough system, the agricultural plough system comprising:
a plough implement (310) connectable to an agricultural work vehicle (307), the plough implement comprising at least one implement wheel; and
at least one prime mover (394) for driving the at least one implement wheel, wherein the method comprises:
receiving plough-orientation-data indicative of an orientation of a component of the plough implement with respect to a direction of travel;
determining, on the basis of the plough-orientation-data, a control-signal for controlling operation of the at least one prime mover (394); and
operating the prime mover (394) on the basis of the control-signal.
